Europäisches Patentamt

(19) European Patent Office

Office européen des brevets

(11) Veröffentlichungsnummer: **0 175 882**
A1

(12) # EUROPÄISCHE PATENTANMELDUNG

(21) Anmeldenummer: 85109645.3

(22) Anmeldetag: 31.07.85

(51) Int. Cl.⁴: **G 05 D 23/00**

(30) Priorität: 07.09.84 CH 4278/84

(43) Veröffentlichungstag der Anmeldung:
02.04.86 Patentblatt 86/14

(84) Benannte Vertragsstaaten:
AT BE CH DE FR GB IT LI NL SE

(71) Anmelder: CONTRAVES AG
Schaffhauserstrasse 580
CH-8052 Zürich(CH)

(72) Erfinder: Zemp, Georg
Friedheimstrasse 26
CH-8057 Zürich(CH)

(54) **Temperiervorrichtung zu einem Laborreaktor.**

(57) Es wird ein Verfahren und eine Vorrichtung zum Temperieren eines Laborreaktors vorgeschlagen, mittels welchem/welcher eine Temperaturveränderung schnell übertragbar ist.

Das Verfahren zeichnet sich dadurch aus, dass ein Temperierfluid feinwirbelig und im wesentlichen spiralförmig aufsteigend in eine von einem Reaktorgefäss (53) und einem Mantelgefäss (50) gebildete Thermokammer (52) eingeführt wird.

Die Vorrichtung zur Durchführung des Verfahrens zeichnet sich im wesentlichen dadurch aus, dass im unteren Bereich des Thermogefässes (50) eine das Temperierfluid entsprechend in die Thermokammer (52) einleitende Düse (38) vorgesehen ist.

EP 0 175 882 A1

./...

FIG. 1

## Temperiervorrichtung zu einem Laborreaktor

Die Erfindung liegt auf dem Gebiet der chemischen Prozesstechnik und betrifft eine Vorrichtung und ein Verfahren zum Temperieren eines Laborreaktors.

Laborreaktoren sind Gefässe aus Glas, Kunststoff oder Metall, in welchen unter vorbestimmten Bedingungen chemische Reaktionen ausgeführt werden. Eine wichtige unter diesen Bedingungen ist die Temperatur. In der Prozesstechnik spielt die Temperaturführung eine enorme Rolle; mannigfaltige Forderungen werden an statische und/oder dynamische Temperaturbedingungen geknüpft, bspw. das stabile Halten einer Temperatur in nur sehr geringen Schwankungsbereichen und die präzise zeitabhängige Temperaturänderung (Aufwärmen, Abkühlen).

Die zeitabhängige Temperaturführung kann generell in drei Anforderungsgruppen aufgeteilt werden: 1. die Abhängigkeit der Zeit sehr langsam bis langsam veränderliche, 2. die in Abhängigkeit der Zeit schnell bis sehr schnell veränderliche und 3. die in Abhängigkeit der Zeit zwischen ausgesprochen langsam und ausgesprochen schnell veränderliche Temperaturführung. Die dritte Gruppe der Temperaturführung ist mitunter die anspruchsloseste und wohl am häufigsten vorkommende Verfahrensweise, während die Temperaturführungen der andern beiden Gruppen 1 und 2 zu den eher anspruchsvollen bis nahezu unlösbaren prozesstechnischen Problemen zuzuordnen sind. Die Problematik des langsamen Abkühlens ist bspw. von der Hohlspiegelherstellung bekannt, bei welcher die Bildung von Temperaturgradienten innerhalb des zu behandelnden Materials möglichst vermieden oder minimiert wird.

Ganz das Gegenteil geschieht, wenn den zu behandelnden Materialien, zum Beispiel einem flüssigen Medium möglichst rasch Energie zuzuführen oder zu entziehen ist.

Die Erfindung befasst sich mit der Problematik des in den Gruppen der schnellen Temperaturveränderungen angesprochenen Problemkreise. Sie stellt sich die Aufgabe, ein Verfahren anzugeben und eine Vorrichtung zu einem Laborreaktor zu schaffen, womit ein Reaktorgefäss mit grossem Temperatur-Anstieg und Gefälle rasch und präzise temperiert werden kann.

Die Aufgabe wird durch die in den Patentansprüchen angegebene Erfindung gelöst.

Die Erfindung wird nachstehend anhand der Zeichnung beschrieben. Es zeigt:

Fig.1 eine schematische Darstellung eines Laborreaktors mit Temperierfluid-Kreislauf;

Fig.2 eine im Schnitt dargestellte Draufsicht des Reaktorgefässes mit dem Fluideinlauf und eine

Fig.2a Ausführungsform einer schematisch dargestellten Düse zur Einstellung des Einströmwinkels.

Der Wärmeaustausch zwischen Materialien (Körpern) erfolgt von selbst stets vom Körper höherer Temperatur zum Körper niederer Temperatur über hauptsächlich drei Mechanismen der Wärmeausbreitung: die Wärmeströmung, die Wärmeleitung und die Wärmestrahlung. Je nach Material des Reaktors, Metall als Wärmeleiter, Glas als Wärmeisolator, verlagern sich die Mechanismen der Wärmeausbreitung schwerpunktmässig. Stets darf aber eine Ueberlagerung aller drei Ausbreitungsformen vorausgesetzt werden.

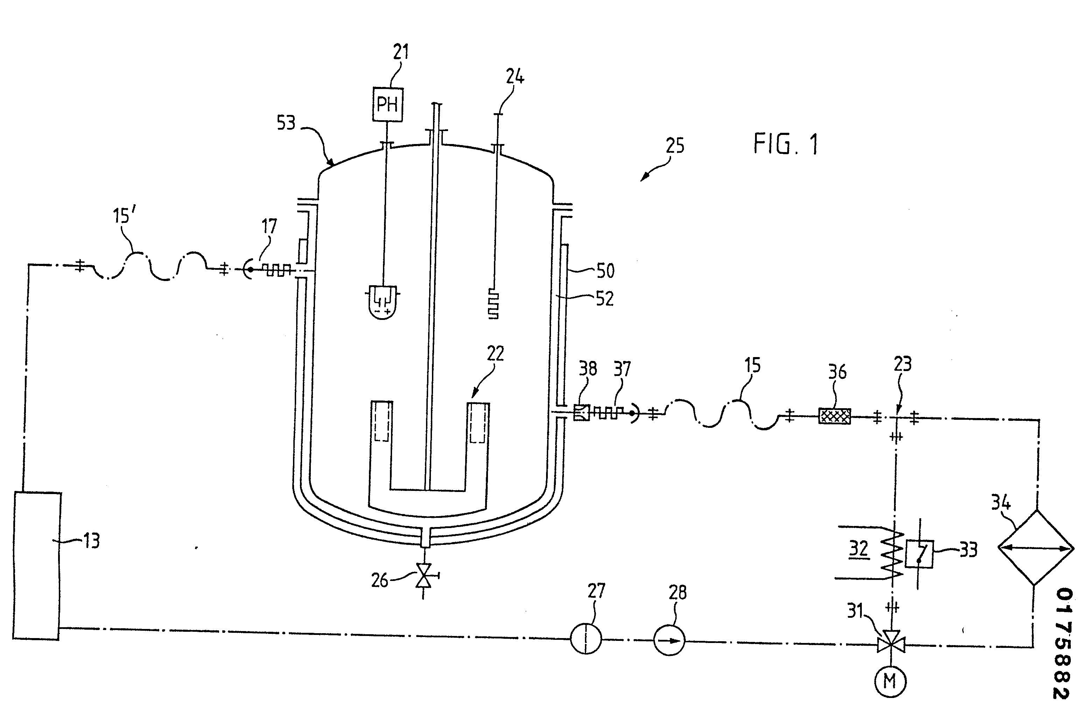

Der Laborreaktor mit der Temperiervorrichrtung gemäss Erfindung benützt zur Wärmeübertragung die Wärmeströmung eines temperierten Fluids (kalt oder warm in Bezug zum Reaktorinhalt) und die Wärmeleitung durch die Reaktorwand in den Reaktorinhalt. Die nutzbare Wärmestrahlung ist von untergeordneter Bedeutung. Fig.1 zeigt schematisch einen Temperierfluid-Kreislauf sowie einen Laborreaktor 25 mit dem das Verfahren gemäss Erfindung durchgeführt werden kann. Ein Reaktorgefäss 53 hat an seiner Oberseite verschiedene, nicht näher bezeichnete Oeffnungen für den Zufluss der Reaktionsteilnehmer oder Edukte und an der Unterseite einen Abfluss für das Reaktionsgut. Die Edukte werden durch Oeffnungen im Deckel des Reaktors zugeführt und das Produkt entnimmt man entweder durch eine bis zum Reaktorboden reichende Sonde oder aber durch eine Oeffnung im Reaktorboden. In diesem Falle ist es die an der tiefsten Stelle angeordnete, mit einem Ventil 26 verschliessbare Oeffnung im Reaktorboden. Durch die im Deckel vorgesehenen Oeffnungen ragen Messinstrumente, wie ein pH-Meter 21, ein Temperaturfühler 24 oder dergleichen in den Reaktorraum, wobei zentral im Deckel noch ein Rührwerk 22 hindurchgeführt und drehbar gelagert ist.

Die Temperiervorrichtung gemäss Erfindung kann durch einen oder mehrere dieser Messinstrumente und/oder Sensoren, aber auch durch andere Prozess-Parameter bestimmende Elemente, gesteuert oder geregelt sein. Der Laborreaktor weist unter anderem ein Mantelgefäss 50 auf, in welches das Reaktorgefäss 53 partiell eintaucht. Zusammen mit dem Reaktorgefäss 53 bildet das Mantelgefäss 50 eine Thermokammer 52 für das Temperierfluid. Durch eine seitlich im unteren Teil des Mantelgefässes 50 angeordnete, nicht näher bezeichnete Oeffnung wird das Fluid in die Kammer 52 eingeleitet und durch eine seitlich im oberen Teil des Mantelgefässes 50 vorgesehene Ueberlauföffnung wieder weggeleitet. Das Temperierfluid durchläuft, wie in Fig.1 dargestellt, einen Kreislauf, in welchem eine Energiequelle und/oder -senke eingeschaltet ist. Die Quelle und Senke sind parallel geschaltet, wobei das vom Reaktor rückgeführte Temperierfluid in Teilströmen (simultan) durch die Quelle und Senke oder aber ausschliesslich durch die Thermoquelle oder durch die Thermosenke geleitet wird. Die thermisch verschieden beaufschlagten Fluidteilströme werden in einem T-Stück 23 wieder vereint und homogenisiert. Zur Homogenisierung ist ein statischer Mischer 36 vorgesehen, der die die thermische Energie transportierenden Massenströme in hohem Grade ohne anfälligen technischen Aufwand mischt.

Mit der Beschreibung des Temperier-Kreislaufes gemäss Fig.1 bei einem Ausgleichsgefäss 13 beginnend, fliesst das Temperierfluid durch einen Filter 27 zu einer volumetrischen Pumpe 28 und von dieser angetrieben zu einem gesteuerten Mischventil 31. An dieser Stelle wird der Fluidstrom entsprechend dem Temperatur-Soll/Ist-Wert-Vergleich in Teilströmen, oder als Hauptstrom auf die Thermoquelle 32,33 und/oder Thermosenke 34 verteilt. Die Thermoquelle 32,33 ist bspw. ein Durchlauferhitzer mit Heizelement 32 und dieses steuernden Schalter 33. Die Temperatursenke ist ein Kältereservoir, realisiert mit einem Wärmeaustauscher 34, der mit einem Kühlmittelkreislauf in Verbindung steht. Vor der Einmündung in den statischen Mischer 36, werden die Teilströme in dem T-Stück 23 wieder zusammengeführt und anschliessend in dem statischen Mischer 36 homogenisiert. Der statische Mischer 36 ermöglicht eine problemlose Homogenisierung der verschiedenen Temperaturzonen im Fluid zu einem hitzespotfreien Fluidstrom von der gewünschten Temperatur. Um eine begrenzte Beweglichkeit des Reaktors 25 für Manipulationen diverser Art zu ermöglichen, ist der Eingang sowie der Ausgang des Kreislaufes an flexible oder biegsame Leitungsstücke 15,15' angeschlossen. Die Temperatur des in den Reaktor einfliessenden und nach Abgabe oder Aufnahme von Wärmeenergie wieder ausfliessenden Fluids, wird in diesem Beispiel an zwei Stellen, mittels Thermosensoren 17 und 37 am Ein- und Ausgang der Thermokammer 52 gemessen und die Temperaturdifferenz ausgewertet. Es ist durchaus möglich, die Temperatur nur an der Einmündung oder am Ausgang zur Thermokammer 52 zu messen und die Temperaturdifferenz zu einer Referenztemperatur auszuwerten. Vom Ausgangsstutzen gelangt das von der Thermokammer 52 kommende Temperierfluid durch das zweite Leitungsstück 15' wieder in das Ausgleichsgefäss 13.

Der Einlauf des Temperierfluids in die Thermokammer 52 erfolgt durch eine Düse 38. Mit dieser Massnahme wird folgendes bezweckt:

Das homogene Temperaturfeld des strömenden Fluids neigt an Grenzstellen zu Körpern mit verschiedener Temperatur zur Bildung von Schichten mit starken, orthogonal zu den Grenzstelle stehenden Temperaturgradienten, da je nach spezifischer Wärme, Wärmekapazität und Wärmeleitfähigkeit des Fluids bei Einsetzen einer partiellen laminaren Strömung die einzelnen Schichten isolierend wirken (können). Die durch solche Schichten verringerte Wärmeleitung ist bei Temperaturflanken üblicher Steilheit normalerweise vernachlässigbar. Sobald jedoch ein schneller Energieaustausch erforderlich ist, dürfen sich solche Temperaturschichtungen nicht ausbilden. Um jedoch die nötige, verhältnismässig rasche Gleichströmung durch den Reaktor 25 zu erzielen, was ein tangentiales Einströmen des Temperierfluids in die ringspaltförmige Thermokammer 52 erfordert und was andererseits die Laminierung der Strömung wiederum fördert, geht die Erfindung von der Idee aus, eine wirbelige Gleichströmung des Temperierfluids vorzusehen, um aus dieser durch die Reaktorwand hindurch effizient Wärmeenergie in das Reaktionsgut zu bringen oder umgekehrt daraus zu entziehen. Diese wirbelige Gleichströmung erhält man durch ein im wesentlichen tangentiales Eindüsen des Temperierfluids in den Thermomantel 52 des Reaktors 25, vorzugsweise in den unteren Teil des Thermomantels 52.

Das Einleiten des Temperierfluids in die Thermokammer 52 mit dem Ziel, im Reaktorgut zeitlich rasch Temperaturänderungen zu erhalten, ist nicht unkritisch. Zwischen Ein- und Auslauf soll einerseits eine möglichst grosse Temperaturdifferenz, die eine effiziente Energieübertragung indiziert, erzielt werden, wobei regeltechnisch jedoch ein zu grosses Delta T(ein-aus) wieder unerwünscht ist. Auch nicht erwünscht sind Bereiche in der Thermokammer 52, in welchen das Fluid langsamer ausgetauscht wird als es der mittleren Strömungsgeschwindigkeit entsprechen würde. Als Beispiel ist der Ein- sowie Auslauf im oberen Teil der Thermokammer 52 bzw. im Mantelgefäss 50 gegenüberliegend angeordnet. Da der Fluidaustausch zum Reaktorboden hin nicht ausreichend genug sein kann, werden die Ein- und Auslassöffnungen vorzugsweise räumlich diagonal und höhenversetzt zueinander angeordnet. Temperaturtaschen in der Thermokammer 52 bilden sich in kleinerem Ausmass auch dann, wenn der Fluidstrom wie auf eine Prallfläche direkt auf die Reaktorwand gerichtet wird. Bei solchem Vorgehen wird die Temperaturströmung im Fluid selbst und vom Fluid zum Reaktorgut gänzlich unübersichtlich.

Dem allem kann begegnet werden, wenn eine möglichst schraubenförmige (Raumspirale) Strömungsführung einer feinwirbeligen beruhigten Gleichströmung angestrebt wird. Die feinwirbelige Strömung verhindert weitgehend eine Temperatur-Gradienten-Bildung in der Thermokammer, wobei der gesteuerte rasche Durchlauf des Fluids eine regeltechnisch optimal verwertbare Temperaturdifferenz als Stellgrösse ermöglicht. Die raumspiralige Strömungsführung verhindert weitgehend eine makroskopische Temperaturinhomogenität in Form der erwähnten Temperaturtaschen in der Thermokammer. Diese vorteilhafte Wärmeenergieführung wird durch Eindüsen des Temperierfluids in die Thermokammer 52 erreicht. Durch das Eindüsen eines temperaturhomogenen Fluids sowie durch Mischen mindestens zweier temperierter Massenströme wird innerhalb verhältnismässig weiter Temperaturgrenzen eine schnelle Temperaturänderung erreicht. Die für die Führung der Thermoenergie nötigen Variablen sind unter anderem die Strömungsgeschwindigkeit durch die Düse, korreliert mit der Austauschgeschwindigkeit des Fluids sowie die Neigung zur Reaktormittelachse der im wesentlichen tangential zum Umfang gerichteten Düse, welche die Steigung der Raumspirale beeinflusst.

Die Kombination der die Fluidtemperaturen produzierenden Anordnung Thermoquelle/-senke/Mischer mit der Massnahme der Erzeugung feinwirbeliger Gleichströmungen in der Thermokammer 52 für eine effiziente Energieaufnahme/-abgabe, erlaubt in zeitlich kurzer Folge Temperaturanstiege und Gefälle im Reaktorgefäss 53 zu erzeugen, die die geforderte Flankensteilheit einer raschen Temperaturänderung aufweisen. Das Ventil 31 kann von einem apparativ vorgegebenen Temperaturgrenzwert direkt in den andern schalten, ohne Mischtemperaturen erzeugen zu müssen. Der nachgeschaltete statische Mischer 36 dagegen erlaubt schnelle Aenderungen der Mischtemperatur zwischen den Grenzwerten, ohne dabei ein Vorhandensein von thermischen Schlieren oder Spots im Temperierfluid befürchten zu müssen. Die ganze Vorrichtung gemäss Erfindung erlaubt eine hohe Dynamik in der Temperaturführung und bei entsprechendem regeltechnischem Aufwand auch eine hohe Präzision der Temperaturführung.

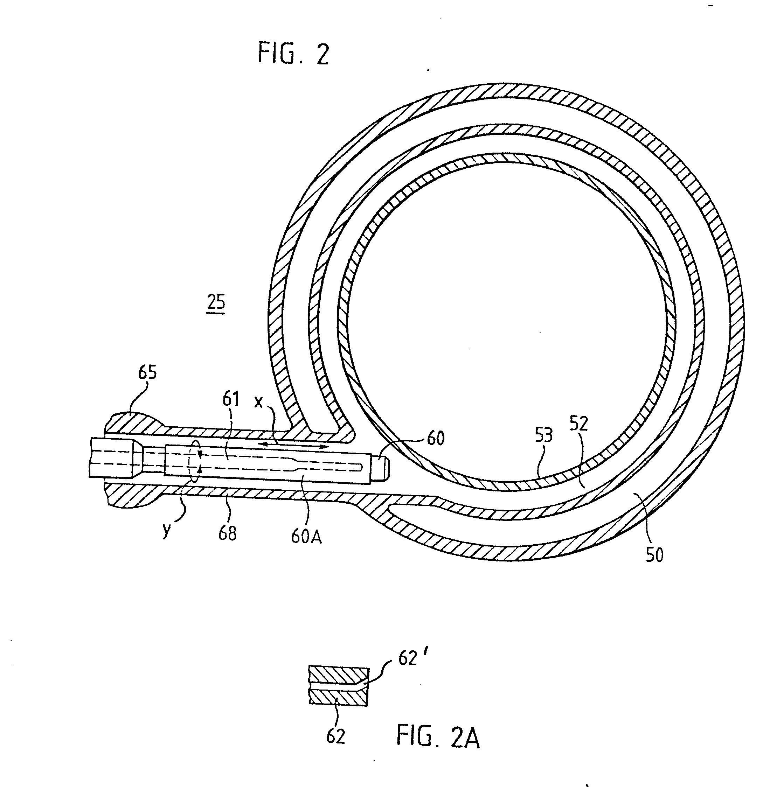

Fig.2 zeigt eine im Schnitt dargestellte Draufsicht des Reaktors 25 und man erkennt das Reaktorgefäss 53 für das Reaktionsgut, welches von dem hohlzylinderförmigen äusseren, doppelwandigen Mantelgefäss 50 umgeben ist. Die Thermokammer 52 zwischen dem Reaktorgefäss 53 und dem Mantelgefäss 50 kann hierbei im wesentlichen als Heiz- oder Kühlmantel angesehen werden. Ein Stutzen 68 ist so am Mantelgefäss 50 angeformt, dass die Verlängerung der Stutzen-Längsachse nahe der Wand durch den Innenraum des Reaktorgefässes 53 verläuft. Bei weiteren, nicht dargestellten Ausführungsformen kann die Längsachse parallel so verschoben sein, dass sie im wesentlichen tangential an der Reaktorgefässwand vorbei oder noch weiter versetzt durch die Thermokammer 52 verläuft. An der Austrittsstelle der Düse 60A bildet sich beim Eindüsen ein Düsenkegel mit divergierenden feinwirbeligen Strömungsteilen. Die von der Düse abgegebene wirbelige Strömung soll auf ihrem Weg durch die Thermokammer 52 möglichst lange erhalten bleiben. Dies kann unter anderem durch Verschieben der Düseneinheit 60 entlang ihrer Längsachse in der mit Doppelpfeil X dargestellten Richtung eingestellt werden. Ein Mass für die Einstellung ist bspw. die Maximierung der Differenztemperatur zwischen Ein- und Auslauf bei konstanter Strömungsgeschwindigkeit des Mediums durch die Düse. Zur Einstellung des raumspiraligen Verlaufs des Temperierfluids in der Thermokammer 52 von unten entgegen der Schwerekraft nach oben, kann die Düsenachse zu einer gedachten Umfanglinie um den Reaktor so angeordnet werden, dass der Düsenstrahl leicht nach oben, gemäss Fig.2 aus der Zeichnungsebene hinaus, d.h., in Richtung Ausflussöffnung gerichtet ist. Aehnlich der Steigung einer feingängigen Schraube, soll der Neigungswinkel unterhalb 10grad liegen. Eine weitere Ausführungsform zur Einstellung des hier diskutierten Neigungswikels ist in Fig.2A schematisch dargestellt. Der in der Schnittdarstellung gezeigte Düsenkopf 62 ist mit einer hier übertrieben schräg gezeichneten Düsenöffnung 62' versehen. Ein einfaches Drehen der Düse 60A um ihre Hauptachse, wie in Fig.2 mit Pfeil Y dargestellt, bewirkt durch das asymmetrische Verschwenken des Düsenkegels einen raumspiraligen Durchfluss der feinwirbeligen Gleichströmung durch die Thermokammer 52.

In der Regel weisen Stutzen bei Reaktoren aus Glas zur Verbindung Kugelschliffe auf. Der Schliffkern 65 eines solchen Kugelschliffes ist in Fig.2 abgebildet. Die Düse 60A ist in diesem Ausführungsbeispiel durch das Stutzenrohr 68 geführt und mit geeigneten, nicht näher dargestellten Mitteln befestigt. Zur Temperaturmessung kann ein Temperaturfühler 61, er entspricht in Fig.1 dem Temperatursensor 37, für die Messung des Temperierfluids am Eingang der Thermokammer 52 konzentrisch im Düsenkanal der Düse 60A angeordnet sein. Diese Messtelle ist zu bevorzugen, wenn auf präzis und schnell sich einstellende Sollwerttemeraturen im Reaktor Wert gelegt wird, da an dieser Stelle die aus verschiedenen Mengenteilen aus der thermischen Quelle und/oder Senke zusammengestellte Mischtemperatur des Fluids evtl. störende Passagen schon durchlaufen hat. Auf jeden Fall sollte die Einlauftemperatur strömungsmässig nach dem statischen Mischer 36 im temperaturhomogenen Medium gemessen werden.

0175882

- 11 -

Patentansprüche:

1. Vorrichtung zu einem Laborreaktor, dadurch gekennzeichnet, dass im Bereich mindestens einer Einlauföffnung für das Temperierfluid im Mantelgefäss (50) des Reaktors (25) eine Düse (38,60) so angeordnet ist, dass sie vom Temperierfluid durchströmt wird und das an der Düsenmündung austretende Temperierfluid in eine Thermokammer (52) eintritt.

2. Temperiervorrichtung zu einem Laborreaktor, gekennzeichnet durch parallel geschaltete thermische Energiequellen und -senken (32,33;34) mit in Serie nachgeschalteter Zusammenführung (23) und Mischeinheit (36), die der Düse (38,60) in der Einlauföffnung für das Temperierfluid in die Thermokammer (52) vorgeschaltet sind.

3. Temperiervorrichtung nach Anspruch 2, dadurch gekennzeichnet, dass der Einlauf in die thermischen Energiequellen und -senken (32,33;34) an ein verstellbares Mehrwegventil (31) angeschlossen ist.

4. Temperiervorrichtung nach einem der Ansprüche 2 oder 4, dadurch gekennzeichnet, dass die Mischeinheit (36) ein statischer Mischer ist.

5. Verfahren zum Temperieren eines (Labor-)Reaktors mit einer Thermokammer, durch welche ein die Wärmeenergie mitführendes Temperierfluid hindurchgeleitet wird, dadurch gekennzeichnet, dass das Temperierfluid als eine im wesentlichen feinwirbelige Gleichströmung in die Thermokammer des den Reaktor umschliessenden Mantelgefässes eingeführt wird.

FIG. 1

FIG. 2

FIG. 2A

Europäisches
Patentamt

**EUROPÄISCHER RECHERCHENBERICHT**

**0175882**
Nummer der Anmeldung

EP 85 10 9645

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | US-A-2 788 264 (A. BREMER) * Spalte 1, Zeilen 15-21; Spalte 2, Zeilen 13-65; Abbildungen 1,2 * | 1,2 | G 05 D 23/00 |
| Y | | 3,5 | |
| | --- | | |
| Y | US-A-3 229 754 (W. BARTLESVILLE) * Spalte 2, Zeilen 43-68; Abbildungen * | 3 | |
| | --- | | |
| Y | GB-A-1 034 951 (COMMISSARIAT A L'ENERGIE ATOMIQUE) * Seite 2, Zeilen 90-122; Abbildungen 1,2 * | 5 | |
| | --- | | RECHERCHIERTE SACHGEBIETE (Int. Cl 4) |
| A | US-A-3 994 164 (W. REGENASS) | | G 05 D B 01 L G 01 N |
| | ----- | | |

Der vorliegende Recherchenbericht wurde für alle Patentansprüche erstellt.

| Recherchenort DEN HAAG | Abschlußdatum der Recherche 10-12-1985 | Prüfer HELOT H.V. |
|---|---|---|